# EUROPÄISCHE PATENTSCHRIFT

(11) **EP 2 344 845 B1**
(45) Veröffentlichungstag und Bekanntmachung des Hinweises auf die Patenterteilung: **28.09.2016**
(21) Anmeldenummer: 09765001.4
(22) Anmeldetag: 07.10.2009
(51) Int. Cl.: G01C 21/36, G09B 29/10, G06T 17/05

(54) **VERFAHREN UND NAVIGATIONSVORRICHTUNG ZUR DREIDIMENSIONALEN PERSPEKTIVISCHEN DARSTELLUNG EINER GELÄNDETOPOGRAPHIE AUF EINER ZWEIDIMENSIONALEN ANZEIGEEINRICHTUNG**
METHOD AND NAVIGATION APPARATUS FOR THE THREE-DIMENSIONAL PERSPECTIVE REPRESENTATION OF TERRAIN TOPOGRAPHY ON A TWO-DIMENSIONAL DISPLAY DEVICE
PROCÉDÉ ET SYSTÈME DE NAVIGATION PERMETTANT LA REPRÉSENTATION TRIDIMENSIONNELLE EN PERSPECTIVE D'UNE TOPOGRAPHIE DE TERRAIN SUR UN DISPOSITIF D'AFFICHAGE BIDIMENSIONNEL

(30) Priorität: 03.11.2008 DE 102008055672; 11.05.2009 DE 102009020737
(43) Veröffentlichungstag der Anmeldung: 20.07.2011
(73) Patentinhaber: Garmin Switzerland GmbH, 8200 Schaffhausen (CH)
(72) Erfinder: GAUPP, Moritz, 97072 Würzburg (DE)
(74) Vertreter: Uexküll & Stolberg
(86) Internationale Anmeldenummer: PCT/DE2009/001383
(87) Internationale Veröffentlichungsnummer: WO 2010/060396

(56) Entgegenhaltungen:
- WO-A2-2009/040154
- DE-A1- 19 544 921
- DE-A1- 19 801 801
- US-A- 6 011 494
- US-A1- 2004 257 364

## Beschreibung

Die Erfindung betrifft ein Verfahren und eine Navigationsvorrichtung zur dreidimensionalen perspektivischen Darstellung einer Geländetopographie auf einer zweidimensionalen Anzeigeeinrichtung.

Aus dem Stand der Technik sind dreidimensionale perspektivische Darstellungen von Geländetopographien auf einer zweidimensionalen Anzeigeeinrichtung bekannt, die genutzt werden, um die Komplexität der darzustellenden Geometrie zu reduzieren und trotzdem ein optisch ausreichendes gutes Ergebnis zu erreichen. Jedoch beruhen diese Verfahren auf einer relativ hohen Anforderung an die Hardwareleistung, insbesondere der CPU und des Graphikprozessors.

Gängige Methoden sind hierbei das Verfahren "Level of Detail" (LOD), das eine Verringerung der Geometriedetails nach Entfernung vornimmt. Als gutes Beispiel dient beispielsweise die perspektivische Bilddarstellung in der Software "Google Earth", die teilweise dreidimensional vorliegende Satellitendaten auf einem Computerbildschirm darstellt. Grundlage der LOD-Darstellung ist die Nutzung von hoher Detailgenauigkeit im Nahbereich und niedriger Detailstufen im Fernbereich. Dies kann die Komplexität der 3D-Objekte betreffen, aber auch die Auflösung der Texturen. Bei Texturen kommt dann das unten genannte, ebenfalls aus dem Stand der Technik bekannte MipMapping zum Einsatz.

Weitere gängige und vorbekannte Methoden sind so genannte Echtzeitdetailreduktionsverfahren, z.B. ROAM (Realtime Optimally-Adapting Mesh) oder SOAR (Stateless One-Pass Adaptive Refinement). Hierzu wird insbesondere auf die Seminararbeit des Herrn Oliver Pilarski, "Terrain Rendering mit ROAM", angefertigt am Institut für Informatik der Universität Stuttgart, 10. Januar 2002, hingewiesen.

Verwandte Ansätze sind das so genannte MipMapping-Verfahren, bei dem eine Folge von Rasterbildern desselben Motivs mit abnehmender Auflösung erstellt wird. Somit können Darstellungen von weiter entfernten Objekten mit geringerer Texturauflösung und näher liegenden Objekten mit hoher Texturauflösung realisiert werden. Beispielhaft hierzu ist der Aufsatz "Fast Terrain Rendering Using Geometrical MipMapping" von Willem H. de Boer, www.connectii.net/emersion, Oktober 2000.

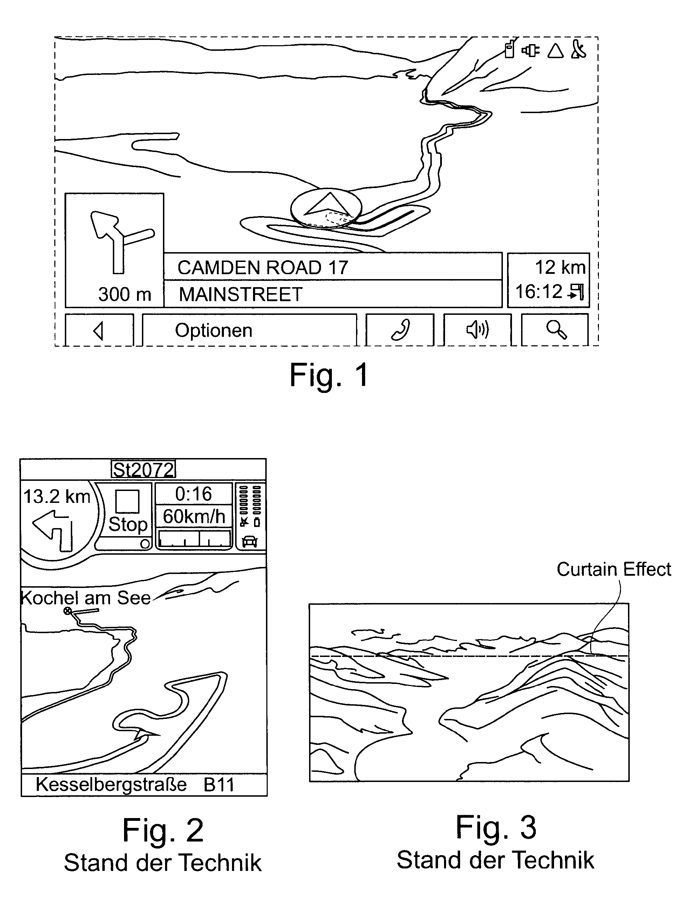

Die Nachteile der oben genannten perspektivischen Darstellungsverfahren, insbesondere der Patch-basierten LOD-Verfahren, liegen darin, dass diese eine "Curtain"-Problematik aufweisen, d.h. eine sichtbare Abgrenzung des hochauflösenden Teils einer perspektivischen Darstellung gegenüber einem mit geringerer Detailtiefe dargestellten Bereich, siehe hierzu beispielhaft die Darstellung in Fig. 3, bei der im unteren Bereich eine hohe Detailauflösung und im oberen Bereich deutlich durch einen "Vorhang" getrennt ein Bereich niedriger Auflösung einer Topographie sichtbar ist (durch gestrichelte Linie indiziert). Somit sind sichtbare Auflösungssprünge bei den vorbekannten Verfahren inhärent und erkennbar, die ein aufwendiges Verschachteln von verschieden großen Patches, insbesondere beim MipMapping, erfordern.

Des Weiteren sind aus dem Stand der Technik Schattierungsverfahren für perspektivische Darstellungen bekannt, die als so genannte Shadow-Maps bezeichnet werden. Diese Schattierungsverfahren dienen dazu, den dreidimensionalen Eindruck der Topographiedarstellung durch Einführung einer imaginären Lichtquelle und Visualisierung des durch sie hervorgerufenen Schattenwurfs zu verstärken.

Eine Shadowmap bezeichnet eine zweite Oberfläche, die auf die bestehende Textur, die aus Straßen und Wald, Wiesen sowie Industrieflächen besteht, gelegt wird. Die Shadowmap ist ein schwarz-weißes Bild, welches die Oberflächenbeschaffenheit durch Schattierung abbildet.

Die Basis der Berechnung der Shadowmap ist das nicht reduzierte Oberflächenmodell. Dieses besteht z.B. aus einem Gitternetz mit 90 Meter Maschenbreite. Nun wird für jeden Gitternetzpunkt ein Farbwert berechnet, der sich aus dem Abstrahlwinkel einer imaginären Sonne auf das Gelände ergibt. Wenn die tatsächlich für die Visualisierung genutzte Geländeauflösung geringer ist, also z.B. im weiter entfernten Layer, simuliert die Shadowmap so eine höhere Auflösung.

Demzufolge bedarf die Berechnung von Shadow-Maps einer hohen Hardwareleistung, großen Ladezeiten der erstellten Texturen und bei einer Veränderung der Topographie einer aufwendigen Neuberechnung der Geometrie.

Die oben genannten aus dem Stand der Technik bekannten Verfahren der LOD-Darstellung und der Shadow-Map-Generierung sind im Navigationsumfeld bisher weitgehend unbekannt.

Die DE 198 01 801 A1 handelt von einem Navigationssystem zur Darstellung eines Gebiets anhand des tatsächlichen Geländes, wobei die Höhenwerte von Abtastpunkten, die das darzustellende Gebiet in Form eines Rasters beschreiben, ausgelesen und zur Modellierung der topographischen Geometrie verwendet werden. Dabei kann vorgesehen sein, dass unterschiedliche Arten topographischer Daten bzw. Daten mit unterschiedlicher Rasterweite der Abtastpunkte eines darzustellenden Gebiets zur Modellierung verwendet werden, wobei die Daten höherer Genauigkeit zur Modellierung eines Gebiets nahe dem Standpunkt und Daten mit geringerer Genauigkeit zur Modellierung eines Gebiets, welches vom Standpunkt weiter entfernt ist, verwendet werden. Für derartige topographische Anzeigen ist weiter vorgesehen, dass eine kontinuierliche Einfärbung der Topographie erfolgt, wobei der Farbwert vom Höhenwert abhängig ist. Auch eine diskrete Farbgestaltung in Abhängigkeit von verschiedenen Höhenwertsbereichen ist in der Druckschrift beschrieben.

Die US 2004/0257364 A1 offenbart ein Verfahren zum Rändern von Schatten in einem virtuellen dreidimensionalen topographischen Modell. In dem Verfahren wird zunächst ein Leuchtpunkt bzw. eine Belichtungsrichtung einer virtuellen Lichtquelle festgelegt. Daraufhin werden Oberflächen des topographischen Modells in zwei Kategorien, der Lichtquelle zugewandten und der Lichtquelle abgewandten Oberflächen, unterteilt. Anschließend werden für jede der Lichtquelle zugewandten Oberflächen Flächen gesucht, welche von der Lichtquelle abgewandt sind und sich zwischen der Lichtquelle und der der Lichtquelle zugewandten Fläche befinden. Daraus werden anschließend Texel auf der der Lichtquelle zugewandten Fläche bestimmt, welche beschattet sind. Dabei erfolgt die Berechnung der Schattierung beim jeweils höchsten Maß von Detailtreue, so dass auch bei einer Darstellung der Flächen mit geringerer Detailtreue Schattierungen mit höherer Detailtreue angezeigt werden können.

Die WO 2009/040154 A2 handelt von einem Verfahren und einem System zur Darstellung geographischer Objekte auf einer Anzeigeeinrichtung, wobei eine Kartendarstellung für den Anwender auf einer Anzeigevorrichtung aus einer Vogelperspektive erzeugt wird. Dieses Verfahren soll dabei auch für Navigationsgeräte einsetzbar sein. Dabei wird der von der virtuellen Kamera abgedeckte Bereich in mehrere Bereiche unterschiedlicher Detailtreue aufgeteilt, wobei der Bereich, der um einen auf der Beobachtungsachse liegenden Referenzpunkt angeordnet ist, den höchsten Grad an Detailtreue aufweist. Als Detailtreue wird dabei sowohl das Maß an Genauigkeit verstanden, mit dem Details der geographischen Objekte wiedergegeben werden, sowie eine graphische Auflösung der dargestellten Aspekte und/oder die Anzahl der dargestellten Objekte. Für die Darstellung von Topographien wird in den Bereichen unterschiedlicher Detailtreue die Topographie anhand einer Gitternetzstruktur dargestellt, welche bei einem Übergang von einem Bereich mit höherer Detailtreue zu einem Bereich mit niedrigerer Detailtreue jeweils gröber wird, und somit auch die Darstellung der Topographie bei jedem Übergang an Detailtreue verliert.

Den Verfahren aus dem Stand der Technik ist allen gemein, dass sie auf die speziellen Anforderungen, die insbesondere durch die eingeschränkten Hardwareressourcen bzw. durch die limitierte Rechenleistung von Navigationsvorrichtungen verursacht werden, nicht oder nur ungenügend Rücksicht nehmen.

Aus diesem Grund muss die Umsetzung der oben genannten Verfahren unter Berücksichtung der geringen Hardwareleistung marktgängiger Navigationsvorrichtungen dergestalt verändert werden, dass eine realistische perspektivische Topographiedarstellung mit scharf dargestellten Straßen und guten optischen Geländeauflösungen auch bei einer solchen geringen Hardwareanforderung erreicht werden kann.

Daher ist es Aufgabe der vorliegenden Erfindung, ein perspektivisches Darstellungsverfahren und eine demgemäße Navigationsvorrichtung bereitzustellen, bei denen eine möglichst große Sichtweite, eine hochdetaillierte Geländedarstellung und scharf gezeichnete Straßen, die in der Topographie einbettbar sind, erzielt werden können.

Somit ist Ziel der Erfindung, ein für eine Navigationsvorrichtung optimiertes Verfahren und eine dementsprechende Vorrichtung zu schaffen, bei der eine optisch ansprechende Topographiedarstellung mit geringer Rechneranforderung und hoher Bildwiederholfrequenz (Frame-Rate) bereitgestellt werden kann.

Diese Aufgabe wird durch ein Verfahren nach Anspruch 1 und eine Vorrichtung nach Anspruch 13 gelöst. Vorteilhafte Ausgestaltungen der Erfindung sind Gegenstand der Unteransprüche.

Das erfindungsgemäße Verfahren zur 3D-Darstellung einer Geländetopographie auf einer zweidimensionalen Anzeigeeinrichtung einer Navigationsvorrichtung umfasst die beiden übergeordneten Verfahrensschritte der Erstellung eines gitterbasierten dreidimensionalen Layermodells der Geländetopographie und einer Darstellung des Layermodells auf einer zweidimensionalen Anzeigevorrichtung einer Navigationsvorrichtung.

Hierzu umfasst der Schritt der Erstellung des 3D-Layermodells die folgenden Teilschritte:
- Generierung von mindestens zwei Layern, wobei jeder Layer zumindest teilweise die Geländetopographie zur Abbildung abdeckt und ein Gitternetz einer voreinstellbaren Maschenauflösung zur Abbildung des abgedeckten Teils der Geländetopographie aufspannt, wobei das Gitternetz jedes Layers eine andere Maschenauflösung als das Gitternetz jedes anderen Layers aufweist;
- Projektion des von jedem Layer abgedeckten Teils der Geländetopographie auf das Gitternetz des Layers;
- Überlagerung aller Layer, wobei der jeweils feinmaschigere Layer mit dem Gitternetz mit feinerer Maschenauflösung über dem jeweils grobmaschigeren Layer mit dem Gitternetz mit gröberer Maschenauflösung gelagert wird, und wobei die Überlagerung aller Layer die Geländetopographie vollständig abdeckt.

Mit anderen Worten betrifft das erfindungsgemäße Verfahren die Anwendung eines digitalen Geländemodells (Digital Terrain Modell - DTM) auf Basis mehrerer übereinander gelegter Layer, wobei jeder Layer ein Gitternetz aufspannt und zumindest einen Teil der Geländetopographie überdeckt und die Maschenauflösung des Gitternetzes jedes Layers gegenüber dem der anderen Layer verschieden ist. Ein Layer besteht dabei aus einem zweidimensionalen Gitter, dessen Maschenbreite die Auflösung des Layers bestimmt. Je höher die Auflösung, d.h. je kleiner die Masche, desto detaillierter wird der darauf abgebildete Teil der Topographie dargestellt. Mindestens zwei verschiedene feinmaschige Layer werden im ersten Verfahrensschritt des Erstellungsprozedere generiert, wobei anschließend die Geländetopographie auf das Gitternetz des jeweiligen Layers abgebildet wird, oder zumindest ein dem Layer zugeordneter Teil dieser Geländetopographie. Die Projektion umfasst zumindest das Hinzufügen der Höheninformationen zu dem zweidimensionalen Gitternetz des jeweiligen Layers, so dass das Gitternetz auf den Höhenverlauf der Topographie im Rahmen der Maschenauflösung dreidimensional projiziert wird. Somit stellt jeder Layer zumindest eine Teilprojektion auf die Geländetopographie dar.

Anschließend werden alle Layer überlagert, wobei der grobmaschigste Layer die unterste Layerebene bildet und der feinmaschigste Layer die oberste Layerebene. Die Überlagerung aller Layer deckt die gesamte sichtbare Geländetopographie lückenlos ab.

Dieses Darstellungsprinzip soll dazu geeignet sein, dass ein von einem Blickursprung weiter entfernter Bereich der Geländetopographie mit zunehmend gröberer Maschengröße dargestellt wird. Dazu kann der Layer mit den entfernten = gering aufgelösten Maschen zuerst gezeichnet werden, danach der nächst feinere Layer, der näher am Blickursprung liegt usw..

Die einzelnen Layer überdecken sich lückenlos in einem Übergangsbereich, stellen aber beispielsweise keine vollständige Abdeckung des darzustellenden Gebiets dar. Störende Effekte, beispielsweise Bereiche der unteren Layer, die durch die darüber gezeichneten Layer durchstechen (sog. Z-Fighting), werden dadurch verhindert, dass gemäß der erfindungsgemäßen Reihenfolge der Layerschichtung der unten liegende Layer vollständig oder teilweise vollständig von den darüber liegenden Layern überdeckt und im Rahmen einer nachgeschalteten Texturierung übermalt wird.

Nachdem das Layermodell, d.h. eine Superposition verschieden feinmaschiger Layer, die zumindest Teilbereiche der Geländetopographie abdecken, erstellt wurde, wird im zweiten großen Verfahrensschritt, der Darstellung des Layermodells, eine zweidimensionale Projektion des Layermodells im Rahmen einer Texturerstellung geschaffen, die auf der Anzeigeeinrichtung einer Navigationsvorrichtung dargestellt werden kann.

Somit schlägt die vorgeschlagene Erfindung eine optimierte Methode zur Darstellung eines Geländemodells mithilfe einer Superposition verschieden fein gemaschter Layer vor, die ein Layermodell superponierter Gitternetze verschiedener Auflösung erstellt, aus dem eine perspektivische Darstellung abgeleitet werden kann.

Erfindungsgemäß wird die Darstellung des Layermodells auf Basis einer von Ort und Ausrichtung der Navigationsvorrichtung abhängigen perspektivischen Blickrichtungsachse auf die Geländetopographie und eines Blickursprungs innerhalb oder außerhalb der Geländetopographie vorgenommen. Dies bedeutet, dass im Verfahrensschritt der Darstellung des im Erstellungsschritt erstellten Layermodells auf Basis eines externen Beobachters, der durch Blickursprung und Blickrichtungsachse definiert ist, eine zweidimensionale Darstellung des Layermodells abgeleitet wird, die auf einer zweidimensionalen Anzeigevorrichtung der Navigationsvorrichtung darstellbar ist. Üblicherweise umfasst die Darstellung zumindest eine Texturierung der Oberfläche des Layermodells mit verschiedenen Farb- oder Grauwerten und gegebenenfalls das Hinzufügen von Informationstexten, Symbolen etc..

Erfindungsgemäß wird dabei eine neue Darstellung auf Basis eines zuvor erstellten Layermodells bei Positionsänderung des Blickursprungs und/oder eine neue Ausrichtung der Blickrichtungsachse, insbesondere bei einer Positionsveränderung der Navigationsvorrichtung, erstellt, bis ein voreinstellbarer Distanzschwellwert der Positionsänderung und/oder der Neuausrichtung überschritten wird, bei dem eine neue Darstellung auf Basis eines neu erstellten Layermodells erfolgt. Somit wird erst dann ein neues Layermodell erstellt, wenn die Positionsveränderung derartig groß ist, dass ein Distanzschwellwert überschritten wird. Zuvor wird eine neuerliche Darstellung auf Basis des bereits zuvor erstellten Layermodells vorgenommen. Mit der Bewegung des Standorts - Drehung oder Bewegung entlang der Blickrichtungsachse, wie es in einem Navigationssystem typisch ist - wird die oben genannte virtuelle Linie weiter in Bewegungsrichtung bis zu einem Distanzschwellwert, bei dem eine neue Reihe Maschen erforderlich ist, geschoben. Erst bei Überschreitung des Distanzschwellwertes wird der Layer neu gezeichnet. Bis dahin ist es jedoch vorteilhaft, das erforderliche Rendering der Topographie im Speicher vorzuhalten und ohne neue Berechnung auf Basis des bereits erstellten Layermodells in einer veränderten Position darzustellen. Hierzu kann in vorteilhafter Weise jeder Layer einen eigenen Distanzschwellwert haben, so dass bei Überschreitung des Distanzschwellwertes eines spezifischen Layers im Rahmen der Erstellung nur dieser Layer neu erstellt, die übrigen Layer jedoch beibehalten werden.

Der vorgenannte Distanzschwellwert kann für jeden Layer des Layermodells individuell und getrennt von anderen Layern einstellbar sein. So ist es erfindungsgemäß vorgesehen, dass bei Überschreitung des Distanzschwellwertes eines spezifischen Layers nur dieser neu erstellt wird, und eine Darstellung lediglich auf Basis eines partiell modifizierten statt komplett neu erstellten Layermodells vorgenommen wird.

Darauf aufbauend kann in einer weiteren vorteilhaften Ausführungsform die Erstellung des Layermodells die Darstellung des Layermodells insoweit berücksichtigen, als eine Anordnung der Layer innerhalb der Geländetopographie erstellt wird, bei der die sichtbaren feinmaschigeren Layer entlang der Blickrichtungsachse dem Blickursprung näher liegen als die sichtbaren grobmaschigeren Layer. Dies bedeutet mit anderen Worten, dass Blickursprung und Blickrichtungsachse, die Blickwinkel und Blickrichtung für die Darstellung des Layermodells definieren, bereits bei der Erstellung des Layermodells derart berücksichtigt werden, dass die Superposition verschieden feinmaschiger Layer diese Layer so zueinander anordnet, dass mit zunehmendem Abstand vom Blickursprung, insbesondere in Richtung der Blickrichtungsachse, die sichtbaren Layerteile immer grobmaschiger werden. Somit definieren Blickursprung und Blickrichtungsachse Lage und Reihenfolge der verschieden feinmaschigen Layer, so dass im Nahbereich des Blickursprungs die Topographie detailliert und mit zunehmender Entfernung vom Blickursprung die Geländetopographie immer gröber dargestellt wird.

Des Weiteren kann in einer vorteilhaften Ausführungsform der Teilschritt der Generierung zumindest feinmaschigere Layer erzeugen, die keine vollständige Überdeckung der Geländetopographie bieten, wobei jedoch bei Überlagerung aller Layer eine lückenlose Darstellung der Geländetopographie erreicht wird. Somit wird sichergestellt, dass der zumindest oberste feinmaschigste Layer des Layermodells nur einen Teilbereich der Geländetopographie überdeckt und die jeweils grobmaschigeren Layer entweder die gesamte Geländetopographie oder die übrigen sichtbaren Teile der Geländetopographie überdecken.

Davon ausgehend kann in einer vorteilhaften Weiterentwicklung die Generierung eine Kaskade von immer feinmaschigeren Layern erzeugen, wobei jeder Layer eine geringere Teilfläche der Geländetopographie als die vorangegangenen grobmaschigeren Layer überdeckt. Demzufolge kann die Generierung eine Kaskade von Layern erzeugen, die jeweils immer feinmaschigere Layer erstellt, die einen immer geringeren Teil der Geländetopographie abbilden. Diese Generierungsvorschrift kann dazu genutzt werden, ein "Work Balancing" anzustreben, bei dem die Anzahl der Knoten jedes Layers gleich bleibt, dafür je nach Verfeinerungsgrad der einzelnen Layer die Teilfläche, die von jedem Layer überdeckt wird, immer kleiner wird. Somit ist der Berechnungsaufwand jedes Layers vergleichbar, so dass die Darstellungsgenauigkeit und der Darstellungsaufwand leicht abgeschätzt werden können.

Ebenfalls kann in einer vorteilhaften Weiterentwicklung des erfindungsgemäßen Verfahrens die Größe jedes Layers so gewählt werden, dass bei der Überlagerung aller Layer kein Layer einen anderen auch nur teilweise überdeckt. Nach dieser Ausführungsform ergibt die Superposition aller Layer eine so genannte Puzzle-Abdeckung der Geländetopographie, indem keine Layerschicht eine andere auch nur teilweise überdeckt, sondern die Layer passgenau aneinander grenzen. Somit können klare Grenzen zwischen den einzelnen Layern definiert werden, und es muss kein überflüssiger Berechnungsaufwand bei überdeckten Flächen verbraucht werden.

In einer vorteilhaften Ausführungsform des Verfahrens wird im Schritt der Überlagerung ein unten liegender Layer im Überdeckungsbereich vollständig intransparent vom oben liegenden Layer verdeckt. Alternativ hierzu ist es auch vorteilhaft denkbar, dass im Schritt der Überlagerung ein unten liegender Layer im Überdeckungsbereich zumindest teilweise transparent von einem oben liegenden Layer überdeckt wird. Während sich im ersten Fall eine harte Grenze zwischen den einzelnen Layerebenen bei der Darstellung ergibt, kann im zweiten Fall ein fließender Übergang im Überdeckungsbereich der Layer erreicht werden.

Das Verfahren bietet mehrere Anpassungsmöglichkeiten zur individuellen Anpassung der Layerabstufung an die gewünschte Qualität der Darstellung. Zum einen kann bei der Generierung der verschiedenen Layer die Anzahl der Layer einstellbar sein. Bereits mit zwei Layern kann hierzu ein hinreichend gutes Ergebnis erzielt werden. Bei mehr als zwei Layern hat man eine höhere Flexibilität bezüglich der Maschengröße.

Des Weiteren ist es durchaus vorteilhaft denkbar, die Abstufung der Maschenauflösungen der Gitter zwischen den Layern einstellbar zu machen. Bei der Auswahl der Gittermaschenauflösungen kann ein Kompromiss zwischen Darstellungsqualität und Ablaufgeschwindigkeit erzielt werden. Dabei kann z.B. im Nahbereich eine hohe Auflösung erhalten bleiben und bei entfernten Bereichen durch eine geringe Auflösung eine hohe Performance erzielt werden.

Letztlich ist es auch denkbar, dass bei der Generierung die Größe der Layer und/oder die Lage des Übergangs- und/oder die Größe des Übergangsbereichs der Layer einstellbar gemacht werden. Dabei kann es beispielsweise möglich sein, die nahe liegenden Maschen bis zu einer virtuellen Linie zu zeichnen. Die dahinter liegenden Teile des darzustellenden Gebiets sind durch den oder die zuvor gezeichneten Layer zur Anzeige gebracht. Die Lage dieser virtuellen Linie bestimmt den Übergangsbereich. Je weiter die Linie vom Blickursprung entfernt ist, umso aufwendiger ist die Berechnung der Darstellung, da ein besonders großer Bereich in einer hohen Auflösung gezeichnet werden muss. Somit kann in Kombination mit den vorherigen Parametern auch hier eine gute Anpassbarkeit der Verfahrensperformance erzielt werden.

Dabei ist es vorteilhaft denkbar, dass bei der Erstellung des Layermodells die Darstellung des Layermodells insoweit berücksichtigt wird, dass die Größe der Layer und/oder die Lage des Übergangsbereichs und/oder die Größe des Übergangsbereichs der Layer relativ zur Entfernung vom Blickursprung entlang der Blickrichtungsachse einstellbar sind.

Hierzu kann es besonders vorteilhaft sein, die Größe jedes Layers so zu wählen, dass der in der perspektivischen Darstellung sichtbare Bereich jedes Layers relativ zu anderen sichtbaren Layerbereichen eine vordefinierbare Größe aufweist, insbesondere dass die sichtbaren Bereiche aller Layer im Wesentlichen gleich groß wirken. Demzufolge kann die Größe der Layer abhängig von Blickursprung und Blickrichtungsachse so gewählt werden, dass homogene gleich große Bereiche definierter Maschengröße sichtbar sind.

In einer weiteren vorteilhaften Weiterbildung des Verfahrens umfasst dieses eine Texturerzeugung zur Erzeugung einer Textur des Layermodells, wobei die Textur auf Basis von Höheninformationen des Layermodells erzeugt wird. Nach Erstellung des dreidimensionalen Layermodells muss dieses zur Darstellung mittels einer Textur ausgefüllt werden, wobei die Textur Farbinformationen über die Oberfläche der Topographie umfasst. Somit werden auf der Topographie üblicherweise Informationen für eine Textur, die flächige Farbgestaltungen, wie Waldgebiete, bebaute Flächen und Wasserflächen, umfasst, aus einer Karte entnommen. Die Textur kann nun durch Schattierungen, die von so genannten Shadowmaps erzeugt werden, ergänzt werden.

Hierzu ist es vorteilhaft denkbar, dass die Texturerzeugung eine Abspeicherung zumindest eines Teils der Textur als Graphikdatei umfasst, wobei die Darstellung des Layermodells auf der abgespeicherten Textur beruht. Somit kann bei vorgegebenem Blickursprung und vorgegebener Blickrichtungsachse eine Textur des Layermodells erzeugt und als Graphik abgespeichert werden. Die Darstellung der Topographie wird dann auf Basis der abgespeicherten und zuvor erstellten Textur vorgenommen. Dies spart rechnerischen Aufwand und erhöht die Darstellungsgeschwindigkeit.

Bei der Erstellung der Textur ist es vorteilhaft denkbar, eine Bestimmung von Farbwerten auf Basis von Höhenwerten des Layermodells vorzunehmen. Da die Höhenwerte aufgrund des zuvor erstellten Layermodells bekannt sind, kann die Textur graphisch verschiedene Höhen leicht darstellten.

Des Weiteren ist es vorteilhaft möglich, dass die Texturerzeugung in Echtzeit erfolgt, insbesondere wenn die Texturerzeugung im Rahmen der Darstellung des Layermodells vorgenommen wird.

In einem weiteren Seitenaspekt der Erfindung umfasst das Verfahren vorteilhafterweise ein Shadowmapping, wobei auf Basis des erstellten Layermodells eine Textur mit Schattierungen belegt wird. Dieses Shadowmapping fügt der Textur Schattierungsflächen hinzu, die aus verschiedenen Grautönen erzeugt werden und die somit mit den sonstigen Farbtönen der Textur einen dreidimensionalen Effekt erzeugen, wobei die Schattierungstextur über die Topographie gelegt wird. Techniken zur Erstellung eines Shadowmappings sind zwar aus dem Stand der Technik bereits bekannt, wurden jedoch bisher noch nicht zur Anzeige dreidimensionaler perspektivischer Darstellungen im Rahmen einer Navigationsvorrichtung angewendet.

Hierzu ist es vorteilhaft denkbar, dass die verschiedenen Schattierungen im Rahmen des Shadowmappings durch verschiedene Grautöne erzeugt werden. Dabei bietet es sich insbesondere an, dass die Schattierungen zumindest auf Basis der Lage von Oberflächen der sichtbaren Gitternetze des Layermodells relativ zur Position einer virtuellen Lichtquelle bestimmt werden. Somit kann die Shadowmap dadurch erzeugt werden, dass aufgrund des Höhenmodells für ein Gitter in jedem Kreuzungspunkt ein Grauwert bestimmt wird, indem aufgrund der umliegenden Punkte eine Schrägfläche bezüglich einer gedachten (virtuellen) Lichtquelle ermittelt wird, wobei aus Schrägfläche und Position der virtuellen Lichtquelle ein Grauwert abgeleitet werden kann. Zwischen den Punkten kann dann interpoliert werden. Damit ist die Shadowmap für den aktuellen Bereich fertig.

Der Shadowmap-Verfahrensschritt kann im Rahmen des Verfahrens grundsätzlich beliebig angeordnet sein. Jedoch ist es vorteilhaft denkbar, dass die Erstellung des Layermodells zumindest teilweise das Shadowmapping umfasst, wobei Schattierungsinformationen für die Darstellung des Layermodells gespeichert werden. Somit kann eine Shadowmap vorgeneriert werden, und hierzu können Schattierungsgrafiken als Datei, insbesondere Bitmap-Datei, gespeichert werden, sofern genügend Speicher vorhanden ist, oder es kann zumindest der Grauwert jedes Gitterpunkts gespeichert werden, um zur Laufzeit die Interpolation durchzuführen. Dies ermöglicht ein Prefetching des Shadowmapping, wodurch die Darstellungsgeschwindigkeit deutlich erhöht werden kann.

Des Weiteren kann zur Laufzeit bei Annähern an einen repräsentierten Bereich eine jeweilige Shadowmap erzeugt, zwischengespeichert und so lange dargestellt werden, wie der in der Shadowmap repräsentierte Bereich sichtbar bleibt. Im letzten Fall besteht außerdem die Möglichkeit, eine veränderte Lichtquellenposition je nach Fahrtrichtung zu berücksichtigen, was insbesondere den realistischen Effekt bei feststehender Lichtquelle (Sonne) und sich drehendem Fahrzeug verbessert.

In einer weiteren vorteilhaften Ausführungsform wird im Rahmen der Erstellung des Layermodells zumindest teilweise ein Shadowmapping vorgenommen, wobei Schattierungsinformationen für die Darstellung des Layermodells gespeichert werden. So können beispielsweise die Oberflächen des Layermodells berechnet und ihre Position zur virtuellen Lichtquelle bestimmt werden.

Daran anschließend wird bei der vorteilhaften Weiterentwicklung im Rahmen der Darstellung des Layermodells eine Bestimmung des Schattierungswerts jedes sichtbaren Gitterpunkts auf Basis der Schattierungsinformationen vorgenommen. Somit wird das Shadowmapping in einem zweistufigen Prozess bei der Erstellung des Layermodells schrittweise durchgeführt und auf Basis der zwischenberechneten Schattierungsinformationen im Rahmen der Darstellung eine Bestimmung der Schattierungsgrauwerte mit höherer Rechengeschwindigkeit und geringerer Hardwareleistung vorgenommen.

Dies ermöglicht in einer weiteren Ausführungsform eine Darstellung des Layermodells, bei der ein Shadowmapping in Echtzeit vornehmbar ist.

Schließlich können im Rahmen der Texturerstellung unter Berücksichtigung der Informationen des Layermodells in einer weiteren Ausführungsform Straßenverläufe auf das Layermodell projiziert und anschließend kann eine Textur mit den aus dem Layermodell projizierten Straßenverläufen erstellt werden. Insbesondere Fig. 1 zeigt eine Texturierung einer Topographie, wobei sich der Straßenverlauf dem unten liegenden dreidimensionalen Layermodell anpasst. Somit können auf die Textur Straßenverläufe gezeichnet werden, die sich ebenfalls entlang dem Topographiemodell bewegen und somit nicht schwebend auf der texturierten Darstellung des Layermodells der Topographie, wie in Fig. 2 dargestellt, erscheinen.

Daneben betrifft die Erfindung eine Navigationsvorrichtung zur Ausführung des oben dargestellten Verfahrens, das eine Erstellungseinrichtung zur Erstellung eines gitterbasierten dreidimensionalen Layermodells der Geländetopographie umfasst, wobei die Erstellungseinrichtung wiederum eine Generierungseinheit zur Generierung von mindestens zwei Layern umfasst, bei der jeder Layer zumindest teilweise die Geländetopographie zur Abbildung abdeckt und ein Gitternetz einer voreinstellbaren Maschenauflösung zur Abbildung des abdeckenden Teils der Geländetopographie aufspannt, und bei der das Gitternetz jedes Layers eine andere Maschenauflösung als das Gitternetz jedes anderen Layers aufweist; eine Projektionseinheit zur Projektion des von jedem Layer abgedeckten Teils der Geländetopographie auf das Gitternetz des Layers umfasst; und eine Überlagerungseinheit zur Überlagerung aller Layer umfasst, wobei der jeweils feinmaschigere Layer mit dem Gitternetz mit feinerer Maschenauflösung über dem jeweils grobmaschigeren Layer mit dem Gitternetz mit gröberer Maschenauflösung gelagert wird, und wobei die Überlagerung aller Layer die Geländetopographie vollständig abdeckt.

Des Weiteren umfasst die erfindungsgemäße Navigationsvorrichtung eine Darstellungseinrichtung zur Darstellung des Layermodells auf einer zweidimensionalen Anzeigeeinrichtung der Navigationsvorrichtung.

Die so definierte Navigationsvorrichtung ist grundsätzlich dazu ausgelegt, das oben dargestellte Verfahren durchzuführen. Sie dient folglich dazu, die Verknüpfung der 3D-Technologien "Layer DTM" (Digital Terrain Modell) und "Shadowmaps" sowie "Drawing Streets on Textures" zu vereinigen, um exakt dargestellte Straßen sowie eine gute optische Geländeauflösung bei geringeren Hardwareanforderungen zu erreichen.

Gerade in Navigationsvorrichtungen liegt das Ziel im Erreichen einer möglichst großen Sichtweite, einer hoch detaillierten Geländetopographiedarstellung und scharf gezeichneter, dem Geländeverlauf angepasster Straßen. Da keine Luftbilder verwendet werden können, muss das Gelände auf anderem Weg glaubwürdig dargestellt werden. Durch hoch detaillierte Shadowmaps wird dabei eine hohe Geländeauflösung simuliert. Mittels des Layered-DTM-Verfahrens werden in Blickrichtung unterschiedliche Auflösungen im Nahbereich verglichen mit dem Fernbereich dargestellt. Die vorgenannte Vorrichtung setzt diese Vorgaben um.

Die von der Navigationsvorrichtung umfasste Erstellungseinrichtung umfasst weiterhin eine Perspektiveinheit, die einen Blickursprung, eine Blickrichtungsachse und einen Blickrichtungswinkel auf das Layermodell definiert. Mithilfe der Perspektiveinheit wird somit für die Darstellung des Layermodells eine beobachterorientierte Betrachtungssituation auf das Layermodell definiert.

Die Erstellungseinrichtung ist so ausgebildet, dass bei Positionsänderung des Blickursprungs und/oder Neuausrichtung der Blickrichtungsachse, insbesondere bei einer Positionsveränderung der Navigationsvorrichtung, eine neue Darstellung auf Basis eines zuvor erstellten Layermodells erfolgt bis ein voreinstellbarer Distanzschwellwert der Positionsänderung oder der Neuausrichtung überschritten wird, bei dem eine neue Darstellung auf Basis eines neu erstellten Layermodells erfolgt, wobei jeder Layer einen individuellen Distanzschwellwert aufweist, bei dessen Überschreitung eine neue Erstellung zumindest dieses Layers erfolgt.

In einer vorteilhaften Ausführungsform der Navigationsvorrichtung umfassen entweder die Erstellungseinrichtung oder die Darstellungseinrichtung oder beide Einrichtungen eine Textureinheit, die eine Textur des Layermodells auf Basis von Höheninformationen des Layermodells erzeugt. Somit kann sowohl in der Erstellungseinrichtung, die die verschiedenen übereinander geschichteten Layer verschiedener Maschengrößen erstellt und auf die Topographie projiziert, als auch in der Darstellungseinrichtung, die eine Darstellung des Layermodells auf einer zweidimensionalen Anzeigeeinrichtung vornimmt, eine (Teil-) Textureinheit umfasst sein, die in dem jeweiligen Verfahrensschritt eine Textur des Layermodells bzw. Rohdaten für die Textur erzeugt.

Schließlich kann in einer vorteilhaften Ausführungsform der Navigationsvorrichtung die Erstellungseinrichtung und/oder die Darstellungseinrichtung eine Shadowmappingeinheit umfassen, die auf Basis des erstellten Layermodells eine Textur mit Schattierungen belegt.

Ausgehend von der bereits oben genannten Textureinheit, die eine Texturierung des Layermodells vornimmt, können in einem weiteren Schritt entweder in der Erstellungseinrichtung auf Basis des Layermodells oder in der Darstellungseinrichtung in Echtzeit oder in jeweils beiden Einrichtungen Shadowmappingeinheiten im Zuge nacheinander geschalteter Verarbeitungsschritte ein Shadowmapping des Layermodells vornehmen und in die Textur einarbeiten.

Im Folgenden wird die Erfindung anhand lediglich Ausführungsbeispiele zeigender Zeichnungen näher erläutert.

Es zeigen:
- Fig. 1: einen Screenshot einer Anzeigeeinrichtung einer Navigationsvorrichtung mit auf einem Layermodell texturiertem Straßenverlauf;
- Fig. 2: einen Screenshot einer Anzeigeeinrichtung einer Navigationsvorrichtung nach dem Stand der Technik;
- Fig. 3: einen Screenshot einer Topographie der Software "Google Earth" nach dem Stand der Technik;
- Fig. 4: ein zweidimensionales Layermodell mit zwei Layern nach einer Ausführungsform;
- Fig. 5: ein Layermodell nach Fig. 4 mit verschobenem Blickursprung;
- Fig. 6: eine perspektivische Ansicht auf das Layermodell nach Fig. 4;
- Fig. 7: eine perspektivische Ansicht auf das Layermodell nach Fig. 5;
- Fig. 8: die dreidimensionale perspektivische Ansicht eines Layermodells einer Ausführungsform;
- Fig. 9: ein texturiertes und mit Shadowmapping versehenes Layermodell der Fig. 8;
- Fig. 10: eine Topographiedarstellung nach dem Stand der Technik;
- Fig. 11: eine Topographiedarstellung nach einer bevorzugten Ausführungsform.

Fig. 1 zeigt eine Topographiedarstellung, in der ein Straßenverlauf auf einem Layermodell mithilfe einer Textur dreidimensional dargestellt wird. Deutlich sind die Höhenunterschiede, die von der Straße überwunden werden, im Straßenverlauf dargestellt.

Fig. 2 zeigt einen Screenshot einer Navigationsvorrichtung nach dem Stand der Technik, in der bereits eine perspektivische dreidimensionale Darstellung einer Topographie enthalten ist. Diese basiert auf dem aus dem Stand der Technik bekannten LOD-Modell und zeigt im Hintergrund den typischen "Curtain-Effekt", bei dem eine deutliche Trennung zwischen dem fein aufgelösten Vordergrund und dem grob aufgelösten Hintergrund erkennbar ist. Des Weiteren ist auf der Textur ein Straßenverlauf eingezeichnet, der jedoch nicht den Höhenverlauf der Topographie berücksichtigt und daher auf der Topographie "zu schweben" scheint.

Fig. 3 stellt eine perspektivische Darstellung einer Google Earth Topographie dar, die ebenfalls nach dem Stand der Technik mit einem LOD-Verfahren erstellt wurde. Eindeutig ist im unteren Bildbereich als Vordergrund eine fein texturierte und aufgelöste Topographiedarstellung zu erkennen, sowie der Curtain-Effekt, der durch eine deutliche Trennlinie im oberen Drittel des Bildes sichtbar wird (gestrichelte Linie) und der den hoch aufgelösten unteren Bildbereich von dem als verschwommene Darstellung des Horizonts zu erkennenden grob aufgelösten oberen Bildbereich trennt.

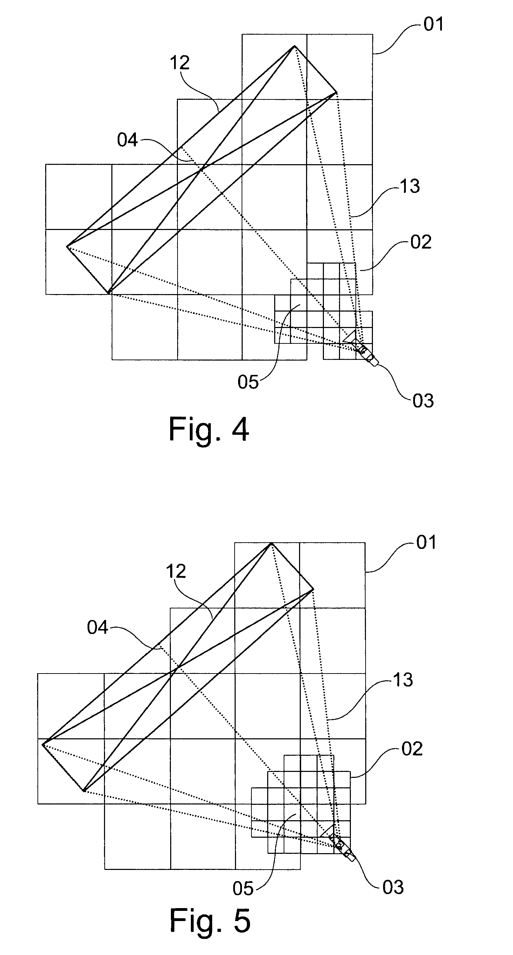

Fig. 4 zeigt eine Draufsicht auf eine Ausführungsform eines Layermodells, die einem Layer Digital Terrain Modell (DTM) entspricht. Dieses Layermodell besteht aus zwei Layern 01, 02, die jeweils zwei unterschiedlich feine Gitternetze (hier Verfeinerungsgrad 1:16) darstellen. Der grobmaschige Layer 01 überdeckt in weiten Teilen die abzubildende Topographie und nimmt im unteren rechten Bereich den feinmaschigen Layer 02 auf, der ihn in einem Überlagerungsbereich 05 überdeckt. In diesem unteren vom feinmaschigen Layer 02 überdeckten Bereich befindet sich eine Kamera als Blickursprung 03, die eine Blickrichtungsachse 04 definiert. Die perspektivische Darstellung wird durch einen Blickwinkel begrenzt, dessen Öffnungswinkelgrenzen 13 und dessen Sichtbarkeitsgrenze 12 im Vorfeld festgelegt wurden. Die Sichtbarkeitsgrenze definiert die maximale Distanz in Blickrichtungsachse, in der noch darstellbare Gegenstände der Topographie gezeigt werden.

Fig. 5 zeigt das Layermodell von Fig. 4, wobei die Kameraposition (Blickursprung 03) um eine gewisse Distanz in Richtung der Blickrichtungsachse verschoben ist. In diesem Fall wurde der feinmaschige Layer 02 neu erstellt, jedoch der grobmaschige Layer 01 lediglich bezüglich des Blickursprungs 03 verschoben. Somit können bei Bewegung der Navigationsvorrichtung lediglich gewisse Teile des Layermodells neu erstellt werden, insbesondere die feinmaschigeren Layer 02, jedoch die grobmaschigen Layer 01 unverändert dargestellt werden.

Im Verhältnis des feinmaschigen zum grobmaschigen Layers kann erkannt werden, dass der grobmaschige Layer 01 mit geringerer Auflösung zu rendern ist, jedoch einen wesentlich größeren Flächenanteil der Topographie als der feinmaschige Layer 02 abdeckt. Das Verhältnis der Maschengrößen zwischen den beiden Layern ist einstellbar und von verschiedenen Parametern abhängig. Im Beispiel ist die Maschendichte des ersten Layers 01 flächenanteilig 16-mal größer als die des zweiten Layers 02. Würde der Übergangsbereich vom ersten Layer 01 zum zweiten Layer 02 eine weitere Masche nach hinten geschoben werden, so müssten circa acht weitere Maschen in höherer Auflösung gerendert werden, was die Fläche und damit den zeitlichen Aufwand für das Rendern dieses Layers um circa ein Viertel erhöhen würde.

Im Bezug auf die Veränderung zwischen Fig. 4 und Fig. 5 wurde bei Überschreiten eines Distanzschwellwerts bezüglich des feinmaschigen Layers 02 dieser neu generiert. Im Verhältnis hierzu wurde der grobmaschige Layer in Sichtrichtung nur verschoben. Der grobmaschige Layer musste somit nicht neu generiert werden und besitzt einen eigenen Distanzschwellwert.

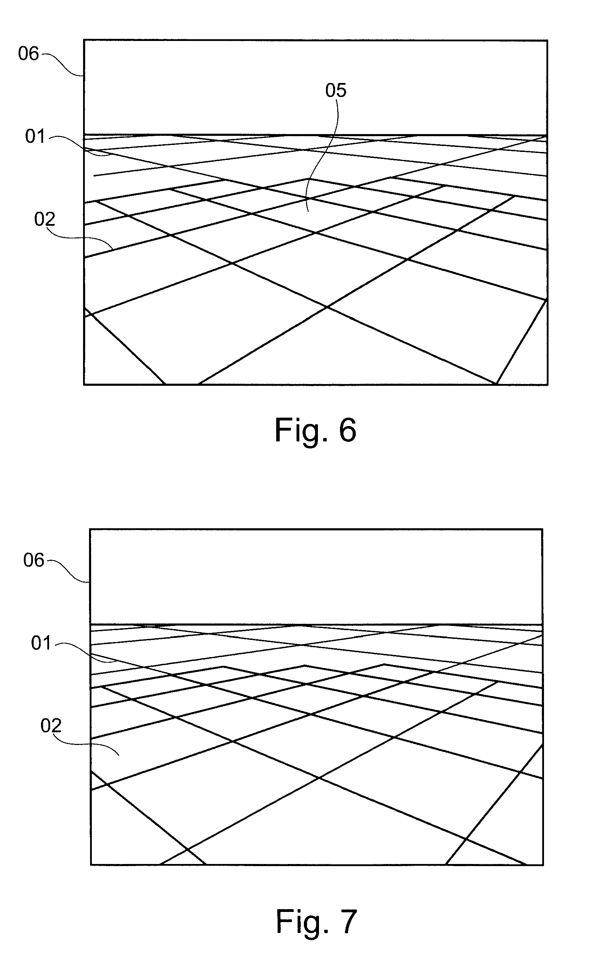

Die Fig. 6 und 7 zeigen Darstellungen aus der Blickpunktperspektive auf die von den fein- und grobmaschigen Layern 01 und 02 aufgespannte Topographie. Dabei wird erkennbar, dass trotz der relativ kleinen Fläche, die der feinmaschige Layer 02 in der Draufsicht der Fig. 4 und 5 einnimmt, in der perspektivischen Ansicht mehr als die Hälfte des darzustellenden Topographiebereichs durch den feinmaschigen Layer 02 abgedeckt ist. Fig. 7 illustriert entsprechend der Fig. 5 eine Bewegung des Blickursprungs in Richtung der Blickrichtungsachse, wodurch eine Neugenerierung des feinmaschigen Layers erforderlich wurde, jedoch der grobmaschige Layer 01 lediglich verschoben wurde.

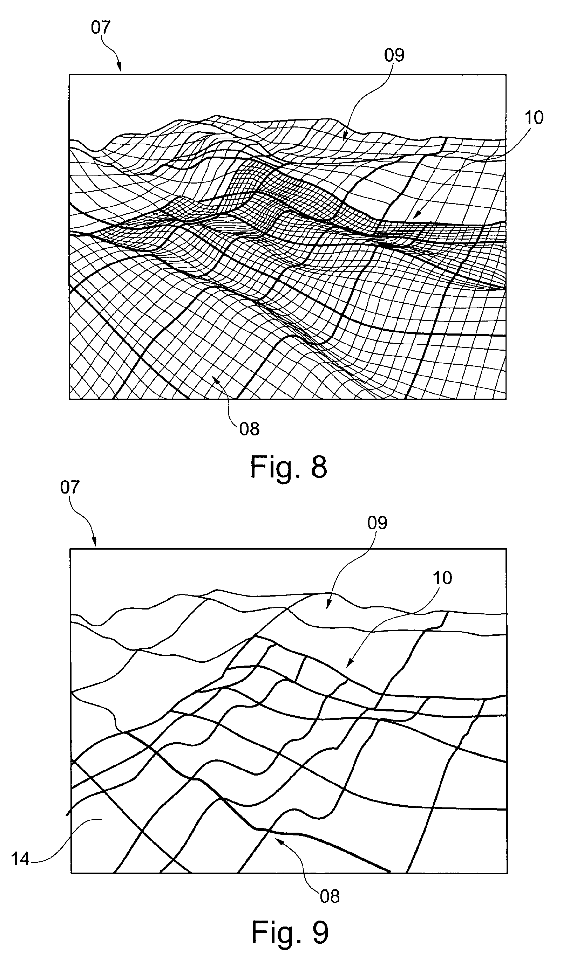

Fig. 8 zeigt das Ergebnis einer Ausführungsform eines Layered-DTM mit zwei Layern 08, 09 anhand einer hügligen Topographie, wobei durch Gitternetzlinien die Auflösungen der einzelnen Layer 09 (grober Layer) und 08 (feinmaschiger Layer) erkennbar sind. Deutlich ist zu erkennen, dass die deutlich höhere Maschendichte im Vordergrund des feinmaschigen Layers 08 gegenüber dem im Hintergrund sichtbaren grobmaschigen Layer 09 die Darstellung detaillierter Höhenunterschiede und feinerer Strukturen ermöglicht. Durch diese Darstellung ist der Übergangsbereich 10 zwischen dem grobmaschigen Layer 09 und dem feinmaschigen Layer 08 erkennbar.

Schließlich zeigt Fig. 9 die in Fig. 8 dargestellte Topographie mit einer Texturbelegung, auf der ein Shadowmapping angewendet wurde. Hierbei sind wieder die beiden verschiedenen Auflösungen des feinmaschigen Layers 08 und des grobmaschigen Layers 09 sowie der Übergangsbereich 10 erkennbar.

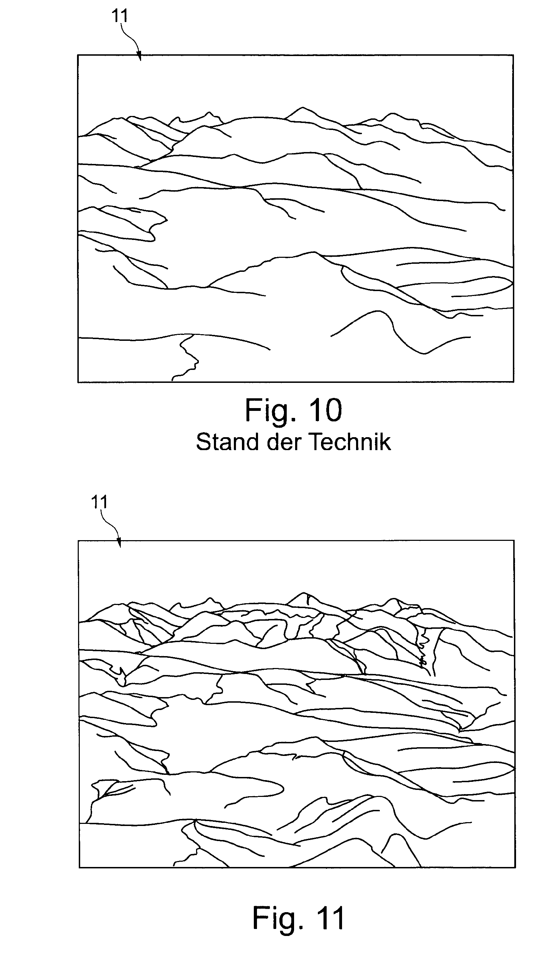

Fig. 10 zeigt eine Topographiedarstellung aus dem Stand der Technik, die mithilfe eines Shadowmapping-Verfahrens schattiert wurde. Dabei wird ein Beleuchtungswert per Triangle ermittelt, d.h. das Gelände wird durch Dreiecke (Triangles) nachgebildet, und jedes Dreieck erhält einen individuell angepassten, zur Ausrichtung der virtuellen Lichtquelle entsprechenden Grauwert. Es ist offensichtlich, dass aufgrund der Größe des sichtbaren Bereichs ein hoher Berechnungsaufwand erforderlich ist, dem dadurch begegnet wurde, dass die Größe der Dreiecke entsprechend angepasst wurde, um den Gesamtaufwand im Rahmen zu halten. Im Ergebnis liefert das Shadowmapping-Verfahren ohne Layered-DTM-Technik sowohl im Nah- als auch im Fernbereich eine relativ verschwommene und unscharfe Darstellung.

Fig. 11 zeigt ein Ausführungsbeispiel des erfindungsgemäßen Verfahrens, bei welchem ein Shadowmapping auf einem Layered-DTM-Topographiemodell angewendet wurde. Da die Grauwerte oder die Höhenwerte vorberechnet werden können, ist eine höhere Auflösung möglich, was sich in einer gegenüber der Fig. 10 wesentlich detaillierten und scharfen Darstellungsweise niederschlägt.

## Patentansprüche

1. Verfahren zur dreidimensionalen perspektivischen Darstellung einer Geländetopographie auf einer zweidimensionalen Anzeigeeinrichtung einer Navigationsvorrichtung, umfassend:
- Erstellung eines gitterbasierten dreidimensionalen Layermodells (07) der Geländetopographie umfassend die Schritte:
- Generierung von mindestens zwei Layern, wobei jeder Layer zumindest teilweise die Geländetopographie zur Abbildung abdeckt und ein Gitternetz einer voreinstellbaren Maschenauflösung zur Abbildung des abgedeckten Teils der Geländetopographie aufspannt, wobei das Gitternetz jedes Layers eine andere Maschenauflösung als das Gitternetz jedes anderen Layers aufweist;
- Projektion des von jedem Layer abgedeckten Teils der Geländetopographie auf das Gitternetz des Layers;
- Überlagerung aller Layer, wobei der jeweils feinmaschigere Layer (02, 08) mit dem Gitternetz mit feinerer Maschenauflösung über dem jeweils grobmaschigeren Layer (01, 09) mit dem Gitternetz mit gröberer Maschenauflösung gelagert wird, und wobei die Überlagerung aller Layer die Geländetopographie vollständig abdeckt;
- Darstellung des Layermodells (07) auf der zweidimensionalen Anzeigeeinrichtung der Navigationsvorrichtung, wobei die Darstellung des Layermodells (07) auf Basis einer von Ort und Ausrichtung der Navigationsvorrichtung abhängigen perspektivischen Blickrichtungsachse (04) auf die Geländetopographie und eines Blickursprungs (03) innerhalb oder außerhalb der Geländetopographie erfolgt, **dadurch gekennzeichnet, dass** bei Positionsänderung des Blickursprungs (03) und/oder Neuausrichtung der Blickrichtungsachse (04), insbesondere bei einer Positionsveränderung der Navigationsvorrichtung, eine neue Darstellung auf Basis eines zuvor erstellten Layermodells (07) erfolgt bis ein voreinstellbarer Distanzschwellwert der Positionsänderung oder der Neuausrichtung überschritten wird, bei dem eine neue Darstellung auf Basis eines neu erstellten Layermodells (07) erfolgt, wobei jeder Layer einen individuellen Distanzschwellwert aufweist, bei dessen Überschreitung eine neue Erstellung zumindest dieses Layers erfolgt.

2. Verfahren nach Anspruch 1
**dadurch gekennzeichnet,**
**dass** die Erstellung des Layermodells (07) die Darstellung des Layermodells (07) insoweit berücksichtigt, als eine Anordnung der Layer innerhalb der Geländetopographie erstellt wird, bei der die sichtbaren feinmaschigeren Layer (02, 08) entlang der Blickrichtungsachse (04) dem Blickursprung (03) näher liegen als die sichtbaren grobmaschigeren Layer (01, 09).

3. Verfahren nach einem der vorangegangenen Ansprüche
**dadurch gekennzeichnet,**
**dass** die Generierung zumindest feinmaschigere Layer (02, 08) erzeugt, die keine vollständige Überdeckung der Geländetopographie bieten, jedoch die Überlagerung aller Layer eine lückenlose Darstellung der Geländetopographie erreicht und/oder wobei die Generierung eine Kaskade von immer feinmaschigeren Layern (02, 08) erzeugt, wobei jeder Layer (02, 08) eine geringere Teilfläche der Geländetopographie als die hierzu vorangegangenen grobmaschigeren Layer (01, 09) überdeckt.

4. Verfahren nach Anspruch 3
**dadurch gekennzeichnet,**
**dass** jeder Layer so gewählt ist, dass bei der Überlagerung aller Layer kein Layer einen anderen auch nur teilweise überdeckt oder dass bei der Überlagerung ein unten liegender Layer im Überdeckungsbereich vollständig intransparent vom oben liegenden Layer überdeckt wird, wobei bei der Überlagerung ein unten liegender Layer im Überdeckungsbereich vollständig intransparent oder teilweise transparent vom oben liegenden Layer überdeckt wird.

5. Verfahren nach einem der vorangegangenen Ansprüche
**dadurch gekennzeichnet,**
**dass** bei der Genierung die Anzahl der Layer einstellbar ist und/oder dass bei der Generierung die Abstufung der Maschenauflösung der Gitter zwischen den Layern einstellbar ist und/oder dass bei der Generierung die Größe der Layer und/oder die Lage des Übergangsbereichs und/oder die Größe des Übergangsbereichs der Layer einstellbar ist.

6. Verfahren nach Anspruch 1
**dadurch gekennzeichnet,**
**dass** die Erstellung des Layermodells (07) die Darstellung des Layermodells (07) insoweit berücksichtigt, als die Größe der Layer und/oder die Lage des Übergangsbereichs und/oder die Größe des Übergangsbereichs (10) der Layer relativ zur Entfernung zum Blickursprung (03) entlang der Blickrichtungsachse (04) einstellbar ist und insbesondere die Größe jedes Layers so gewählt ist, dass der perspektivisch dargestellte sichtbare Bereich (06) jedes Layers relativ zu anderen sichtbaren Layerbereichen eine vordefinierbare Größe aufweist, insbesondere dass die sichtbaren Bereiche aller Layer im Wesentlichen gleich groß wirken.

7. Verfahren nach einem der vorangegangenen Ansprüche
**dadurch gekennzeichnet,**
**dass** das Verfahren eine Texturerzeugung zur Erzeugung einer Textur (14) des Layermodells (07) umfasst, wobei die Textur (14) auf Basis von Höheninformationen des Layermodells (07) erzeugt wird.

8. Verfahren nach Anspruch 7
**dadurch gekennzeichnet,**
**dass** die Texturerzeugung eine Abspeicherung zumindest eines Teils der Textur (14) als Grafikdatei umfasst, wobei die Darstellung des Layermodells (07) auf der abgespeicherten Textur (14) beruht und/oder dass die Texturerzeugung eine Bestimmung von Farbwerten auf Basis von Höhenwerten des Layermodells (07) umfasst und/oder dass die Texturerzeugung in Echtzeit erfolgt.

9. Verfahren nach einem der vorangegangenen Ansprüche
**dadurch gekennzeichnet,**
**dass** das Verfahren ein Shadowmapping umfasst, wobei auf Basis des erstellten Layermodells (07) eine Textur (14) mit Schattierungen belegt wird, wobei insbesondere die Schattierungen durch verschiedene Grautöne erzeugt werden, und wobei die Schattierung zumindest auf Basis der Lage von Oberflächennormalen der sichtbaren Gitternetze des Layermodells (07) relativ zur Position einer virtuellen Lichtquelle bestimmt wird.

10. Verfahren nach Anspruch 9
**dadurch gekennzeichnet,**
**dass** die Erstellung des Layermodells (07) zumindest teilweise das Shadowmapping umfasst, wobei Schattierungsinformationen für die Darstellung des Layermodells (07) gespeichert werden, wobei insbesondere die Darstellung des Layermodells (07) eine Bestimmung des Schattierungswertes jedes sichtbaren Gitterpunktes auf Basis der Schattierungsinformation vornimmt.

11. Verfahren nach Anspruch 10
**dadurch gekennzeichnet,**
**dass** die Darstellung des Layermodells (07) das Shadowmapping in Echtzeit vornimmt.

12. Verfahren nach einem der Ansprüche 7 bis 11
**dadurch gekennzeichnet,**
**dass** bei der Texturerstellung des Layermodells (07) zunächst Straßenverläufe auf das Layermodell (07) projiziert werden und anschließend eine Textur (14) mit den auf dem Layermodell (07) projizierten Straßenverläufen erstellt wird.

13. Navigationsvorrichtung zur Ausführung eines Verfahrens nach einem der vorangegangenen Verfahrensansprüche, umfassend:
eine Erstellungseinrichtung zur Erstellung eines gitterbasierten dreidimensionalen Layermodells (07) der Geländetopographie umfassend
- eine Generierungseinheit zur Generierung von mindestens zwei Layern, wobei jeder Layer zumindest teilweise die Geländetopographie zur Abbildung abdeckt und ein Gitternetz einer voreinstellbaren Maschenauflösung zur Abbildung des abgedeckten Teils der Geländetopographie aufspannt, wobei das Gitternetz jedes Layers eine andere Maschenauflösung als das Gitternetz jedes anderen Layers aufweist;
- eine Projektionseinheit zur Projektion des von jedem Layer abgedeckten Teils der Geländetopographie auf das Gitternetz des Layers;
- eine Überlagerungseinheit zur Überlagerung aller Layer, wobei der jeweils feinmaschigere Layer (02, 08) mit dem Gitternetz mit feinerer Maschenauflösung über dem jeweils grobmaschigeren Layer (01, 09) mit dem Gitternetz mit gröberer Maschenauflösung gelagert wird, und wobei die Überlagerung aller Layer die Geländetopographie vollständig abdeckt;
- eine Perspektiveinheit, die einen Blickursprung innerhalb oder außerhalb der Geländetopographie, eine von Ort und Ausrichtung der Navigationsvorrichtung abhängige Blickrichtungsachse auf die Geländetopographie und einen Blickrichtungswinkel auf das Layermodell definiert; und
- eine Darstellungseinrichtung zur Darstellung des Layermodells (07) auf einer zweidimensionalen Anzeigeeinrichtung der Navigationsvorrichtung,
wobei die Darstellung des Layermodells (07) auf Basis der perspektivischen Blickrichtungsachse und des Blickursprungs erfolgt,
**dadurch gekennzeichnet, dass** die Erstellungseinrichtung so ausgebildet ist, dass bei Positionsänderung des Blickursprungs und/oder Neuausrichtung der Blickrichtungsachse, insbesondere bei einer Positionsveränderung der Navigationsvorrichtung, eine neue Darstellung auf Basis eines zuvor erstellten Layermodells erfolgt bis ein voreinstellbarer Distanzschwellwert der Positionsänderung oder der Neuausrichtung überschritten wird, bei dem eine neue Darstellung auf Basis eines neu erstellten Layermodells erfolgt, wobei jeder Layer einen individuellen Distanzschwellwert aufweist, bei dessen Überschreitung eine neue Erstellung zumindest dieses Layers erfolgt.

14. Vorrichtung nach Anspruch 13,
**dadurch gekennzeichnet,**
**dass** die Erstellungseinrichtung und/oder die Darstellungseinrichtung eine Textureinheit umfasst, die eine Textur (14) des Layermodells (07) auf Basis von Höheninformationen des Layermodells (07) erzeugt und insbesondere die Erstellungseinrichtung und/oder die Darstellungseinrichtung eine Shadowmappingeinheit umfasst, die auf Basis des erstellten Layermodells (07) eine Textur (14) mit Schattierungen belegt.

## Claims

1. A method for a three-dimensional perspective representation of a terrain topography on a two-dimensional display means of a navigation device, comprising:
- establishing a grid-based three-dimensional layer model (07) of the terrain topography comprising the steps of:
- generating at least two layers, wherein each layer covers at least partially the terrain topography for representation and generates a grid having a presettable mesh resolution for representation of the covered portion of the terrain topography, wherein the grid of each layer comprises another mesh resolution than the grid of each other layer,
- projecting the portion of the terrain topography covered by each layer onto the grid of the layer,
- superimposing all layers, wherein the respective more finely meshed layer (02, 08) having the grid with finer mesh resolution is disposed above the respective more coarsely meshed layer (01, 09) having the grid with coarser mesh resolution, and wherein the superposition of all layers completely covers the terrain topography,
- representing the layer model (07) on the two-dimensional display means of the navigation device, wherein the representation of the layer model (07) takes place on the basis of a perspective viewing direction axis (04) onto the terrain topography, which viewing direction axis depends on a location and an orientation of the navigation device, and on the basis of a viewing point of origin (03) within or outside of the terrain topography,
**characterized in that**
upon a change of position of the viewing point of origin (03) and/or a re-orientation of the viewing direction axis (04), in particular upon a change of position of the navigation device, a new representation is effected on the basis of a previously established layer model (07) until a presettable distance threshold value of the change of position or of the re-orientation is exceeded, at which a new representation on the basis of a newly established layer model (07) is effected, wherein each layer comprises an individual distance threshold value upon exceeding of which a new generation of at least this layer takes place.

2. The method according to claim 1,
**characterized in that**
the establishing of the layer model (07) takes into consideration the representation of the layer model (07) to the extent that an arrangement of the layers within the terrain topography is established in which arrangement the visible more finely meshed layers (02, 08) are closer to the viewing point of origin (03) along the viewing direction axis (04) than the visible more coarsely meshed layers (01, 09).

3. The method according to any of the preceding claims,
**characterized in that**
the generation creates at least more finely meshed layers (02, 08) which do not provide a complete coverage of the terrain topography, but the superimposition of all layers achieves a continuous representation of the terrain topography, and/or wherein the generation creates a cascade of more and more finely meshed layers (02, 08), wherein each layer (02, 08) covers a smaller partial area of the terrain topography than the respective preceding more coarsely meshed layer (01, 09).

4. The method according to claim 3,
**characterized in that**
each layer is chosen in such a manner that upon the superimposition of all layers no layer covers another one even only partially or that upon the superimposition a lower layer in the overlap area is covered in a completely non-transparent manner by the upper layer, wherein upon the superimposition a lower layer in the overlap area is covered by the upper layer in a completely non-transparent manner or in a partially transparent manner.

5. The method according to any of the preceding claims,
**characterized in that**
in the generation the number of layers is adjustable and/or in the generation the graduation of the mesh resolution of the grid between the layers is adjustable and/or in the generation the size of the layer and/or the arrangement of the transition region and/or the size of the transition region is adjustable.

6. The method according to claim 1,
**characterized in that**
the establishing of the layer model (07) takes into consideration the representation of the layer model (07) to the extent that the size of the layer and/or the arrangement of the transition region and/or the size of the transition region (10) of the layers with respect to the distance to the viewing point of origin (03) along the viewing direction axis (04) is adjustable, and, in particular, the size of each layer is chosen in such a manner that the visible region (06) of each layer, which region is represented in a perspective manner, comprises a predefinable size with respect to other visible layer regions, in particular that the visible regions of all layers appear to essentially have the same size.

7. The method according to any of the preceding claims,
**characterized in that**
the method comprises a texture creation for creating a texture (14) of the layer model (07), wherein the texture (14) is created on the basis of height information of the layer model (07).

8. The method according to claim 7,
**characterized in that**
the texture creation comprises storing at least a portion of the texture (14) as a graphics file, wherein the representation of the layer model (07) is based on the stored texture (14), and/or the texture creation comprises a determination of color values on the basis of height values of the layer model (07) and/or the texture creation is effected in real time.

9. The method according to any of the preceding claims,
**characterized in that**
the method comprises a shadow mapping, wherein a texture (14) is provided with shadings on the basis of the established layer model (07), wherein the shadings are in particular created by different shades of grey, and wherein the shading is determined at least on the basis of the arrangement of surface normals of the visible grids of the layer model (07) with respect to the position of a virtual light source.

10. The method according to claim 9,
**characterized in that**
the establishing of the layer model (07) at least partially comprises the shadow mapping, wherein shading information for the representation of the layer model (07) is stored, wherein, in particular, the representation of the layer model (07) effects a determination of the shading value of each visible grid point on the basis of the shading information.

11. The method according to claim 10,
**characterized in that**
the representation of the layer model (07) effects the shadow mapping in real time.

12. The method according to any of claims 7 to 11,
**characterized in that**
in the texture creation of the layer model (07) road courses are at first projected onto the layer model (07) and subsequently a texture (14) is created with the road courses projected on the layer model (07).

13. A navigation device for carrying out a method according to any of the preceding method claims, comprising:
an establishing means for establishing a grid-based three-dimensional layer model (07) of the terrain topography, comprising
- a generating unit for generating at least two layers, wherein each layer covers at least partially the terrain topography for representation and generates a grid having a presettable mesh resolution for representation of the covered portion of the terrain topography, wherein the grid of each layer comprises another mesh resolution than the grid of each other layer,
- a projecting unit for projecting the portion of the terrain topography covered by each layer onto the grid of the layer,
- a superposition unit for superimposing all layers, wherein the respective more finely meshed layer (02, 08) having the grid with finer mesh resolution is disposed above the respective more coarsely meshed layer (01, 09) having the grid with coarser mesh resolution, and wherein the superposition of all layers completely covers the terrain topography,
- a perspective unit which defines a viewing point of origin within or outside of the terrain topography, a viewing direction axis onto the terrain topography depending on the position and orientation of the navigation device, and a viewing direction angle onto the layer model, and
- a representation means for representing the layer model (07) on a two-dimensional display means of the navigation device,
wherein the representation of the layer model (07) takes place on the basis of a perspective viewing direction axis (04) and of the viewing point of origin, **characterized in that** the establishing means is configured in such a manner that upon a change of position of the viewing point of origin and/or a re-orientation of the viewing direction axis, in particular upon a change of position of the navigation device, a new representation is effected on the basis of a previously established layer model until a presettable distance threshold value of the change of position or of the re-orientation is exceeded, at which a new representation on the basis of a newly established layer model is effected, wherein each layer comprises an individual distance threshold value upon exceeding of which a new generation of at least this layer takes place.

14. The device according to claim 13,
**characterized in that**
the establishing means and/or the representation means comprises a texture unit which creates a texture (14) of the layer model (07) on the basis of height information of the layer model (07), and, in particular, the establishing means and/or the representation means comprises a shadow mapping unit which provides a texture (14) with shadings on the basis of the established layer model (07).

## Revendications

1. Procédé pour la représentation en perspective tridimensionnelle de la topographie d'un terrain sur un dispositif d'affichage bidimensionnel d'un dispositif de navigation, comprenant :
- la création d'un modèle à couches (07) tridimensionnel basé sur une grille, de la topographie du terrain, comprenant les étapes suivantes :
- génération d'au moins deux couches, chaque couche recouvrant au moins partiellement la topographie du terrain pour la représentation et étendant un quadrillage avec une résolution de maille pouvant être prédéterminée pour la représentation de la partie recouverte de la topographie du terrain, le quadrillage de chaque couche présentant une résolution de maille différente du quadrillage de chaque autre couche ;
- projection de la partie recouverte par chaque couche de la topographie du terrain sur le quadrillage de la couche ;
- superposition de toutes les couches, la couche (02, 08) à maille plus fine avec le quadrillage avec la résolution de maille plus fine étant disposée au-dessus de la couche (01, 09) à maille plus grossière avec le quadrillage avec la résolution de maille plus grossière et la superposition de toutes les couches recouvrant entièrement la topographie du terrain ;
- représentation du modèle à couches (07) sur le dispositif d'affichage bidimensionnel du dispositif de navigation, la représentation du modèle à couches (07) ayant lieu sur la base d'un axe de direction de regard (04) en perspective dépendant du lieu et de l'orientation du dispositif de navigation, sur la topographie du terrain et d'une origine de regard (03) à l'intérieur ou à l'extérieur de la topographie du terrain,
**caractérisé en ce que**
lors de la modification de la position de l'origine du regard (03) et/ou lors d'une réorientation de l'axe de direction de regard (04), plus particulièrement lors d'une modification de la position du dispositif de navigation, une nouvelle représentation a lieu sur la base d'un modèle à couches (07) créé préalablement jusqu'à ce qu'une valeur seuil de distance, pouvant être prédéterminée, de la modification de position ou de la réorientation, pour laquelle une nouvelle représentation a lieu sur la base d'un modèle à couches (07) nouvellement créé, soit dépassée, chaque couche présentant une valeur seuil de distance individuelle, une nouvelle création d'au moins cette couche ayant lieu lors du dépassement de celle-ci,.

2. Procédé selon la revendication 1,
**caractérisé en ce que**
la création du modèle à couches (07) prend en compte la représentation du modèle à couches (07) dans la mesure où une disposition des couches est créée à l'intérieur de la topographie du terrain, pour laquelle les couches (02, 08) visibles à mailles plus fines sont plus proches, le long de l'axe de direction de regard (04), de l'origine du regard (03) que les couches (01, 09) visibles à mailles plus grossières.

3. Procédé selon l'une des revendications précédentes,
**caractérisé en ce que**
la génération produit au moins des couches (02, 08) à mailles plus fines, qui n'offrent par un recouvrement complet de la topographie du terrain, mais la superposition de toutes les couches permet d'obtenir une représentation sans lacunes de la topographie du terrain et/ou la génération produisant une cascade de couches (02, 08) à mailles toujours plus fines, chaque couche (02, 08) recouvrant une surface partielle de la topographie du terrain qui est plus petite que les couches (01, 09) précédentes à mailles plus grossières.

4. Procédé selon la revendication 3,
**caractérisé en ce que**
chaque couche est choisie de façon à ce que, lors de la superposition de toutes les couches, aucune couche ne recouvre une autre, même partiellement, ou **en ce que**, lors de la superposition, une couche sous-jacente est recouverte par la couche située au-dessus de manière entièrement non transparente dans la zone de recouvrement, une couche sous-jacente étant recouverte, lors de la superposition, étant recouverte par une couche située au-dessus de manière entièrement non transparente ou partiellement transparente dans la zone de recouvrement.

5. Procédé selon l'une des revendications précédentes,
**caractérisé en ce que**
lors de la génération, le nombre de couches est réglable et/ou **en ce que**, lors de la génération, l'échelonnement de la résolution des mailles des grilles entre les couches est réglable et/ou **en ce que**, lors de la génération, la taille des couches et/ou la position de la zone de transition et/ou la taille de la zone de transition des couches est réglable.

6. Procédé selon la revendication 1,
**caractérisé en ce que**
la création du modèle à couches (07) prend en compte la représentation du modèle à couches (07) dans la mesure où la taille des couches et/ou la position de la zone de transition et/ou la taille de la zone de transition (10) des couches est réglable par rapport à la distance par rapport à l'origine du regard (03) le long de l'axe de direction du regard (04) et plus particulièrement la taille de chaque couche est choisie de façon à ce que la zone (06) visible représentée en perspective de chaque couche présente, par rapport aux autres zones de couches visibles, une taille pouvant être prédéterminée, plus particulièrement de façon à ce que les zones visibles de toutes les couches paraissent être de tailles approximativement égales.

7. Procédé selon l'une des revendications précédentes,
**caractérisé en ce que**
le procédé comprend une génération de texture pour la génération d'une texture (14) du modèle à couches (07), la texture (14) étant générée sur la base d'informations d'altitude du modèle à couches (07).

8. Procédé selon la revendication 7,
**caractérisé en ce que**
la génération de texture comprend l'enregistrement d'au moins une partie de la texture (14) sous la forme d'un fichier graphique, la représentation du modèle à couches (07) reposant sur la texture (14) enregistrée et/ou **en ce que** la génération de texture comprend une détermination de valeurs de couleurs sur la base d'informations d'altitude du modèle à couches (07) et/ou **en ce que** la génération de texture a lieu en temps réel.

9. Procédé selon l'une des revendications précédentes,
**caractérisé en ce que**
le procédé comprend une cartographie des ombres, une texture (14) avec des ombres étant créée sur la base du modèle à couches (07) créé, plus particulièrement les ombres étant générées par différents niveaux de gris, et les ombres étant déterminées au moins sur la base de la position des normales des surfaces des quadrillages visibles du modèle à couches (07) par rapport à la position d'une source de lumière virtuelle.

10. Procédé selon la revendication 9,
**caractérisé en ce que**
la création du modèle à couches (07) comprend au moins partiellement la cartographie des ombres, les informations concernant les ombres étant enregistrées pour la représentation du modèle à couches (07), plus particulièrement la représentation du modèle à couches (07) effectuant une détermination de la valeur d'ombre de chaque point visible de la grille sur la base des informations concernant les ombres.

11. Procédé selon la revendication 10,
**caractérisé en ce que**
la représentation du modèle à couches (07) effectue la cartographie des ombres en temps réel.

12. Procédé selon l'une des revendications 7 à 11,
**caractérisé en ce que**
lors de la création de la texture du modèle à couches (07), les tracés des routes sont d'abord projetés sur le modèle à couches (07) puis une texture (14) est créée avec les tracés des routes projeté sur le modèle à couches (07).

13. Dispositif de navigation pour la réalisation d'un procédé selon l'une des revendications précédentes, comprenant :
un dispositif de création pour la création d'un modèle à couches (07) tridimensionnel de la topographie d'un terrain, comprenant :
- une unité de génération pour la génération d'au moins deux couches, chaque couche recouvrant au moins partiellement la topographie du terrain pour la représentation et étendant un quadrillage, avec une résolution de maille pouvant être préréglée, pour la représentation de la partie recouverte de la topographie du terrain, le quadrillage de chaque couche présentant une résolution de maille différente du quadrillage de chaque autre couche ;
- une unité de projection pour la projection de la partie, recouverte par chaque couche, de la topographie du terrain sur le quadrillage de la couche ;
- une unité de superposition pour la superposition de toutes les couches, la couche (02, 08) à maille plus fine, avec le quadrillage avec une résolution de maille plus fine, est disposée au-dessus de la couche (01, 09) à maille plus grossière, avec le quadrillage avec une résolution de maille plus grossière et la superposition de toutes les couches recouvrant entièrement la topographie du terrain ;
- une unité de perspective, qui définit une origine de regard à l'intérieur ou à l'extérieur de la topographie du terrain, un axe de direction de regard qui dépend du lieu et de l'orientation du dispositif de navigation sur la topographie du terrain et un angle de direction de regard sur le modèle à couches ; et
- un dispositif de représentation pour la représentation du modèle à couches (07) sur un dispositif d'affichage bidimensionnel du dispositif de navigation,
la représentation du modèle à couches (07) ayant lieu sur la base de l'axe de direction de regard en perspective et de l'origine du regard,
**caractérisé en ce que** le dispositif de création est conçu de façon à ce que, lors d'une modification de la position de l'origine du regard et/ou d'une réorientation de l'axe de direction de regard, plus particulièrement lors d'une modification de la position du dispositif de navigation, une nouvelle représentation a lieu sur la base d'un modèle à couches créé préalablement jusqu'à ce qu'une valeur seuil de distance, pouvant être préréglée, de la modification de position ou de la réorientation, à laquelle une nouvelle représentation a lieu sur la base d'un modèle à couches nouvellement créé, soit dépassée, chaque couche présentant une valeur seuil de distance individuelle, une nouvelle création d'au moins cette couche ayant lieu lors du dépassement de celle-ci.

14. Dispositif selon la revendication 13,
**caractérisé en ce que**
le dispositif de création et/ou le dispositif de représentation comprend une unité de texture qui génère une texture (14) du modèle à couches (07) sur la base d'informations d'altitude du modèle à couches (07) et plus particulièrement le dispositif de création et/ou le dispositif de représentation comprend une unité de cartographie des ombres, qui créé, sur la base du modèle à couches (07) créé, une texture (14) avec des ombres.
